# EUROPEAN PATENT APPLICATION

(11) **EP 3 838 576 A1**
(43) Date of publication of application: **23.06.2021**
(21) Application number: 19218082.6
(22) Date of filing: 19.12.2019
(51) Int. Cl.: B29D 99/00, B29C 70/48, B29C 70/44, B29C 70/86, F03D 1/06, B29C 70/34, B29C 33/50, B29L 31/08

(54) **METHOD FOR MANUFACTURING A WIND TURBINE BLADE**

(71) Applicant: Siemens Gamesa Renewable Energy A/S, 7330 Brande (DK)
(72) Inventor: Olesen, Bendt, 9270 Klarup (DK); Truong, Yannick Cao van, 9000 Aalborg (DK); Colfelt, Christian Nicholas Sebber, 9200 Aalborg SV (DK); Pedersen, Dan, 9490 Pandrup (DK); Thomsen, Anders Haslund, 9220 Aalborg (DK)
(74) Representative: Aspacher, Karl-Georg

(57) **Abstract**

A method for manufacturing a wind turbine blade, comprising the steps of:
- arranging an upper mould (8) comprising a pre-casted fibre lay-up (9") on a lower mould (23) comprising a dry fibre lay-up (24') and a mould core (46),
- applying vacuum to a space (63) between the upper and lower moulds (8, 23) and the mould core (46),
- infusing at least the dry fibre lay-up (24') and a connection region (66, 67) between the dry fibre lay-up (24') and the pre-casted fibre lay-up (9") with a resin (65), and curing the resin (65).

By having the pre-casted fibre lay-up in the upper mould, the packing and positioning of dry composite materials on top of the mould core is avoided.

## Description

The present invention relates to a method for manufacturing a wind turbine blade.

One way to produce more power using a wind turbine under given wind conditions is to increase the size of the blades. However, the manufacture of wind turbine blades is becoming increasingly difficult with increasing blade sizes.

Currently, many wind turbine blades are made by pre-manufacturing parts of the blade separately, such as a pressure-side shell and a suction-side shell, and gluing the parts to each other. The parts are, for example, premanufactured by infusing composite materials such as glass fibres with a resin and curing the resin. However, the gluing process has many disadvantages. It is, for example, difficult to achieve a sufficient strength and robustness of the glueline. Furthermore, the method requires an exact positioning of very large parts within limited time, i.e. before the applied glue hardens.

In another method, disclosed in EP 1 310 351 A1, the blade is manufactured by packing composite materials for the entire blade, or for a lengthwise blade section, on a mandrel and by infusing and curing resin. Thereby, glue joints are avoided. However, packing and positioning of dry composite material on top of the - usually flexible - mandrel is challenging, in particular for very large blades. Furthermore, with increasing blade sizes, the volume required to be filled with resin by vacuum infusion is also increased, making the resin infusion more difficult.

It is one object of the present invention to provide an improved method for manufacturing a wind turbine blade.

Accordingly, a method for manufacturing a wind turbine blade is proposed. The method comprises the steps of:
- arranging an upper mould comprising a pre-casted fibre lay-up on a lower mould comprising a dry fibre lay-up and a mould core,
- applying vacuum to a space between the upper and lower moulds and the mould core,
- infusing at least the dry fibre lay-up and a connection region between the dry fibre lay-up and the pre-casted fibre lay-up with a resin, and curing the resin.

By having the pre-casted fibre lay-up in the upper mould, the packing and positioning of dry composite materials on top of the mould core is avoided.

Further, pre-casting the fibre lay-up in the upper mould is preferably done by packing a dry fibre lay-up in the upper mould turned upside down, infusing resin and curing. Since the upper mould is turned upside down, packing the fibre material is done also in the upper mould towards a mould with a well-defined geometry instead of towards a flexible mould core.

Furthermore, having the pre-casted fibre lay-up in the upper mould, the volume the resin has to fill during the vacuum infusion of the dry fibre lay-up in the lower mould and the connection region is smaller for the same blade size compared to the case in which the fibre lay-up for the upper part is not pre-casted. Further, the path the resin has to travel during the vacuum infusion is shorter for the same blade size compared to the case in which the fibre lay-up for the upper part is not pre-casted. The resin has, for example, to rise to a lower height above a floor level of a manufacturing site compared to the case in which the fibre lay-up for the upper part is not pre-casted. Therefore, it is easier to infuse the fibre lay-up in a resin infusion process with a good quality, even in the case of larger blade sizes.

An advantage over the method in which blade parts are glued together is that here a laminate joint is provided connecting the upper pre-casted fibre lay-up and the dry fibre lay-up in the lower mould, once cured. Compared to a connection using an adhesive, the laminate joint formed by resin infusion is a lighter and at the same time stronger joint. It is lighter because in the case of an adhesive, the weight of the adhesive is added in the bond line. Further, the strength of the laminate joint formed by vacuum infusion is comparable to the strength of the pristine laminate. In addition, the laminate joint formed by vacuum infusion avoids the problem of glue joints of having a different material in the glue than in the rest of the blade.

The wind turbine blade is part of a rotor of a wind turbine. The wind turbine is an apparatus to convert the wind's kinetic energy into electrical energy. The wind turbine comprises, for example, the rotor having one or more of the blades connected each to a hub, a nacelle including a generator, and a tower holding, at its top end, the nacelle. The tower of the wind turbine may be connected via a transition piece to a foundation of the wind turbine, such as a monopile in the seabed.

The pre-casted fibre lay-up in the upper mould becomes, in the manufactured blade, a first shell of the blade. In particular, it becomes a first half shell of the blade.

The dry fibre lay-up in the lower mould becomes, once infused and cured, in the manufactured blade a second shell of the blade. In particular, it becomes a second half shell of the blade.

The first and second shells are, in particular, fibre-reinforced resin laminates.

The first shell may comprise a pressure side (upwind side) of the blade and the second shell may comprise a suction side (downwind side) of the blade or vice versa.

The first and the second shells may each comprise the entire length of the blade from a blade root to a blade tip. Alternatively, the wind turbine blade may be split in a lengthwise direction. In this case, each of the first and second shells comprises a fraction of the total length of the blade.

The wind turbine blade, e.g., its root section, is, for example, fixedly connected to the hub. The wind turbine blade is, for example, directly bolted to the hub.

Alternatively, the wind turbine blade, e.g., the root section, is rotatably connected to the hub. For example, the wind turbine blade is connected to a pitch bearing of the wind turbine, and the pitch bearing is connected to the hub. The pitch bearing is configured to adjust the angle of attack of the blade according to the wind speed to control the rotational speed of the blade.

Apart from the (cylindrical) root section connected with the hub, the wind turbine blade is formed aerodynamically. The wind turbine blade comprises, for example, the pressure side (upwind side) and the suction side (downwind side). The pressure side and the suction side are connected with each other at a leading edge and a trailing edge. The pressure and suctions sides and the leading and trailing edges define an interior cavity of the wind turbine blade.

The mould core (or mandrel) comprises, for example, an inner firm core and an external flexible portion surrounding the inner firm core.

The mould core may comprise two or more mould core portions. Each of the two or more mould core portions may comprise an inner firm core and a flexible external portion.

The upper and lower moulds and the mould core define the space in which the vacuum for the vacuum infusion process is applied. Resin is infused into this space and fills it partly so as to infuse at least the dry fibre lay-up and the connection region. Thus, the pre-casted fibre lay-up is infused with resin only in the connection region, while the remaining portion of the pre-casted fibre lay-up is - apart from the pre-casting process itself - not infused with resin.

The dry fibre lay-up and/or the pre-casted fibre lay-up includes, in particular, glass fibres, carbon fibres, aramid fibres and/or natural fibres.

The pre-casted fibres are, in particular, fibres infused with resin and cured before the step of infusing the dry fibre lay-up in the lower mould and the connection regions with resin. In other words, the pre-casted fibres in the upper mould are pre-casted in a first wet process (first resin infusion process) and cured, and the dry fibre lay-up in the lower mould and the connection regions are infused with resin in a second wet process (second resin infusion process), wherein the first wet process (including curing) and second wet process are spaced apart in time.

The dry fibre lay-up comprises (only) fibres in dry condition, in particular, fibres without a resin. Fibres in dry condition are more flexible compared to fibres with resin such as fibres casted in resin or pre-impregnated fibres (prepreg). Packing fibres in dry condition into the lower or upper mould allows to match the shape of the respective mould.

The resin includes, for example, thermosets, thermoplastics, epoxy, polyurethane, vinyl ester and/or polyester.

The resin is, in particular, infused due to the generated vacuum in the space between the upper and lower moulds and the mould core. The resin is, for example, cured by applying heat.

According to an embodiment, the dry fibre lay-up and/or the pre-casted fibre lay-up includes a fibre core material.

The fibre core material comprises, for example, wood, balsa, PET foam and/or PVC foam.

When the fibre lay-up including the core material is infused and cured with the resin, a fibre-reinforced resin laminate with a core structure made from the core material is obtained. For example, a sandwich-structured fibre-reinforced resin laminate may be obtained in which a layer of the core material is arranged between layers of fibre-reinforced resin.

The dry fibre lay-up and/or the pre-casted fibre lay-up includes, for example, an inner laminate and an outer laminate and in between the core material.

Having the fibre core material allows to reduce the weight of the final fibre-reinforced resin laminate while maintaining a sufficient rigidity and/or strength of the blade.

According to a further embodiment, the connection region comprises an overlap region in which the pre-casted fibre lay-up and the dry fibre lay-up overlap each other.

Having the overlap region allows to better join the pre-casted fibre lay-up and the dry fibre lay-up with each other by infusing and curing the resin. The resulting joint can better transfer loads in the blade shell.

The overlap region may be smaller than the connection region. Alternatively, the connection region may concur with the overlap region.

According to a further embodiment, the pre-casted fibre lay-up and/or the dry fibre lay-up comprises the fibre core material in the overlap region.

Having the same structure of the fibre-reinforced resin laminate with core material throughout the overlap and connection region allows to obtain a blade shell with homogenous properties, such as homogenous strength and weight, across the overlap and connection region.

According to a further embodiment, both the dry fibre lay-up and the pre-casted fibre lay-up comprise at least one tapered edge portion overlapping each other in the overlap region.

Having the tapered edge portions allows a good overlap of the dry fibre lay-up and the pre-casted fibre lay-up and a smooth transition from one to the other.

According to a further embodiment, the pre-casted fibre lay-up and the dry fibre lay-up are in direct contact with each other in the connection region.

In particular, a surface of the pre-casted fibre lay-up and a surface of the dry fibre lay-up are in direct contact with each other. In the case of tapered edge portions overlapping each other, inclined surfaces of the tapered edge portions may be in direct contact with each other.

According to a further embodiment, an auxiliary material is disposed between a surface of at least one edge portion of the pre-casted fibre lay-up and a surface of at least one edge portion of the dry fibre lay-up.

The auxiliary material is, for example, a non-fibre material. The auxiliary material is, for example, a PUR material.

Having the auxiliary material allows, in particular, more freedom in configuring different blade cross-section profiles to obtain different aerodynamic profiles (airfoils). For example, the auxiliary material may be applied to form a sharp edge of an aerodynamic profile, e.g. at the trailing edge of the air foil.

According to a further embodiment, the dry fibre lay-up in the lower mould has a main portion inside a cavity of the lower mould and at least one extending portion extending from the main portion beyond a side edge of the cavity of the lower mould, and wherein the method comprises, before the step of arranging the upper mould on the lower mould, the steps of arranging the mould core on the dry fibre lay-up in the lower mould and folding up the at least one extending portion of the dry fibre lay-up onto the mould core.

Having the extending portion and folding it up onto the mould core allows to configure the connection region offset from a region where the upper and lower mould edges are coming into contact with each other. Hence, the pre-casted fibre lay-up can be better arranged and positioned on the dry fibre lay-up. Further, the connection region can be configured, for example, offset from the leading edge and/or the trailing edge. Hence, the connection region can be configured, for example, offset from the maximum curvature of the airfoil.

The lower mould comprises, in particular, the mould cavity for forming and casting the dry fibre lay-up. Further, the lower mould comprises horizontal portions extending from the side edges of the mould cavity to the right and left, as seen in a cross-sectional view. The mould cavity accommodates, in particular, the main portion of the dry fibre lay-up. The at least one extending portion of the dry fibre lay-up is, for example, laid, before folding it up, on the horizontal portion(s) of the lower mould.

According to a further embodiment, a continuation portion of the at least one extending portion has the same layer structure and/or the same thickness as the main portion, the continuation portion being continuous with the main portion.

Having said continuity in layer structure and/or thickness from the main portion to the continuation portion of the dry fibre lay-up allows, in particular, to ensure homogenous properties, such as homogenous strength and/or weight, of the main portion and the continuation portion. The continuation portion may cover the leading edge and/or trailing edge of the airfoil. In this way, homogenous strength and/or weight of the blade can be ensured, for example, across the leading edge and/or the trailing edge.

According to a further embodiment, the method comprises, after the step of folding up the at least one extending portion onto the mould core, the step of fixing the at least one folded-up extending portion at the mould core.

With the extending portion fixed at the mould core, the upper mould can be more easily arranged on the lower mould and the mould core.

The extending portion is, for example, fixed at the mould core by applying a tape, e.g., an adhesive tape and/or a glass tape.

The dry fibre lay-up may comprise two extending portions. Each of the two extending portions may be fixed at the mould core by an adhesive tape. Alternatively, the two extending portions may be fixed to each other, e.g., with a tape laid across the mould core.

According to a further embodiment, the method comprises, before the step of arranging the upper mould comprising the pre-casted fibre lay-up on the lower mould, the step of fixing the pre-casted fibre lay-up to the upper mould.

The upper mould comprising the fixed pre-casted fibre lay-up can be easier arranged on the lower mould. This is in particular the case as the upper mould is turned around.

Fixation of the pre-casted fibre lay-up may be done by attaching a foil to each of the edges of the pre-casted fibre lay-up and the upper mould and applying vacuum to a space covered by the foil. Fixation may also be done by using an elongated element, e.g. a bar and/or (wooden) stick clamped to the upper mould, e.g., to the horizontal portions of the upper mould. Fixation may also be done by bolting the pre-casted fibre lay-up to the upper mould.

According to a further embodiment, the method comprises, before the step of applying vacuum, the step of covering the mould core with a vacuum bag, and wherein the vacuum is applied to a space between the upper and lower moulds and the vacuum bag.

Covering the mould core with a vacuum bag may include sealing the vacuum bag. The mould core may also be covered with two or more vacuum bags to increase tightness.

In the case, the mould core comprises more than one mould core portion, each mould core portion may be covered with one or more vacuum bags.

In embodiments, the method may comprise the step of removing the vacuum bag and/or the mould core, after infusing and curing the resin. The mould core and/or the vacuum bag is, for example, removed through the blade root section. In the case the mould core comprises the flexible external portion, this flexible external portion may be compressed before removing the mould core. For example, vacuum may be generated in a space between the vacuum bag and the mould core, thereby compressing the flexible external portion and reducing the size of the mould core.

According to a further embodiment, the method comprises, before the step of arranging the upper mould on the lower mould, the step of arranging one or more reinforcement beams on the dry fibre lay-up.

Thus, the one or more reinforcement beams can be casted together with the dry fibre lay-up in one wet process, i.e. one infusion and curing process.

The one or more reinforcement beams comprise, for example, a pressure-side beam, a suction-side beam, a leading edge beam and/or a trailing edge beam. A reinforcement beam can be a dry layup, a pre-casted element or a combination of the two.

A pressure-side beam is, in particular, a beam on the pressure side of the wind turbine blade. A suction-side beam is, in particular, a beam on the suction side of the wind turbine blade. A leading edge beam is, in particular, a beam on the leading edge of the wind turbine blade. A trailing edge beam is, in particular, a beam on the trailing edge of the wind turbine blade.

According to a further embodiment, the method comprises, before the step of arranging the upper mould on the lower mould, the step of arranging a web, and wherein at least the dry fibre lay-up, the connection region and/or the web is/are infused with resin. One or more webs, e.g., two webs may be arranged. In embodiments, arranging a web includes arranging a pre-casted web.

Thus, the web can be casted together with the fibres in one wet process. The web provides, for example, strength to the blade.

According to a further embodiment, the web is configured to transversally connect the pre-casted fibre lay-up and the dry fibre lay-up, once cured, within an interior cavity of the blade.

The web is, in particular, a shear web. The web connects, in particular, the blade shells of the pressure side and the suction side in the interior cavity of the blade. The web provides shear strength to the blade.

Arranging the shear web and infusing the dry fibre lay-up, the connection region and the shear web with resin allows to join the shear web and the upper and lower shells in a single process step by infusing and curing the resin. The shear web can be a dry layup, a pre-casted element or a combination of the two.

Further possible implementations or alternative solutions of the invention also encompass combinations - that are not explicitly mentioned herein - of features described above or below with regard to the embodiments. The person skilled in the art may also add individual or isolated aspects and features to the most basic form of the invention.

Further embodiments, features and advantages of the present invention will become apparent from the subsequent description and dependent claims, taken in conjunction with the accompanying drawings, in which:
Fig. 1 shows a wind turbine according to an embodiment;
Fig. 2 shows a cross-section view of a pre-casted fibre lay-up forming a first shell of a blade of the wind turbine of Fig. 1, the pre-casted fibre lay-up being manufactured in an upper mould turned upside down;
Fig. 3 shows a cross-section view of a dry fibre lay-up forming, once casted and cured, a second shell of the blade of the wind turbine of Fig. 1, the dry fibre lay-up being arranged in a lower mould;
Fig. 4 shows a view similar as Fig. 3 with a mould core and a web arranged on the dry fibre lay-up in the lower mould;
Fig. 5 shows a view similar as Fig. 4 with extending portions of the dry fibre lay-up being folded up onto the mould core;
Fig. 6 shows the upper mould with the pre-casted fibre lay-up of Fig. 2 during arrangement on the lower mould with the dry fibre lay-up of Fig. 5;
Fig. 7 shows a view similar as Fig. 6 with the upper mould being arranged on the lower mould, wherein the pre-casted fibre lay-up is overlapping with the dry fibre lay-up in an overlap region;
Fig. 8 shows a view similar as Fig. 7 with resin infused;
Fig. 9 shows a further embodiment of an overlap of a pre-casted fibre lay-up and a dry fibre lay-up;
Fig. 10 shows another embodiment of an overlap of a pre-casted fibre lay-up and a dry fibre lay-up; and
Fig. 11 shows a flowchart illustrating a method for manufacturing the wind turbine blade of the wind turbine of Fig. 1.

In the figures, like reference numerals designate like or functionally equivalent elements, unless otherwise indicated.

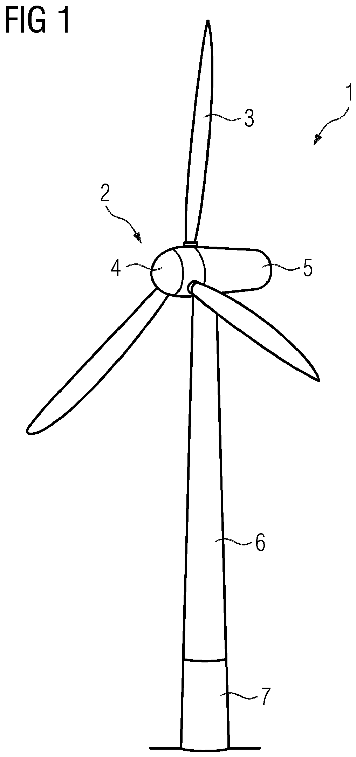

Fig. 1 shows a wind turbine 1 according to an embodiment. The wind turbine 1 comprises a rotor 2 having one or more blades 3 connected to a hub 4. The hub 4 is connected to a generator (not shown) arranged inside a nacelle 5. During operation of the wind turbine 1, the blades 3 are driven by wind to rotate and the wind's kinetic energy is converted into electrical energy by the generator in the nacelle 5. The nacelle 5 is arranged at the upper end of a tower 6 of the wind turbine 1. The tower 6 is erected on a foundation 7 such as a monopile or tripile. The foundation 7 is connected to and/or driven into the ground or seabed.

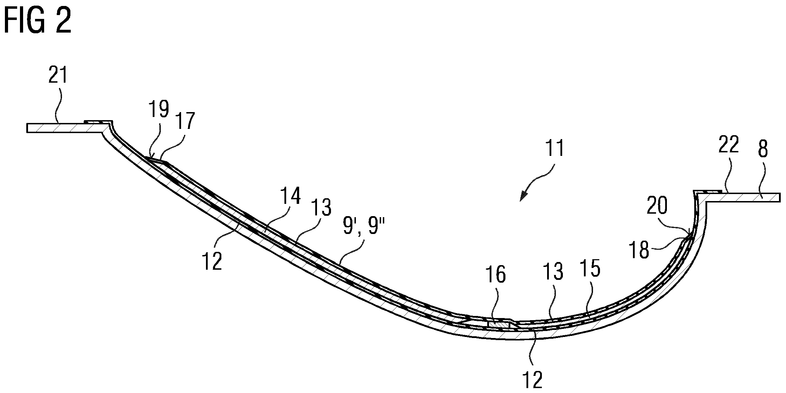

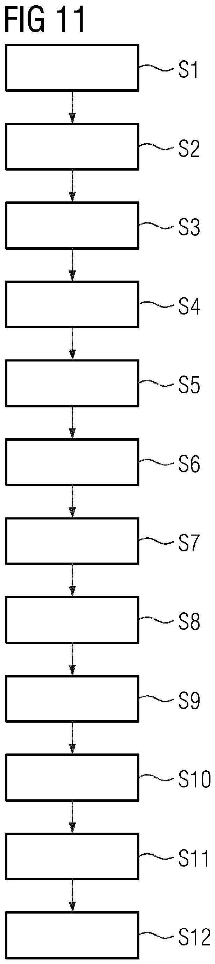

In the following an improved method for manufacturing a wind turbine blade 3 is described with respect to Figs. 2 to 11.

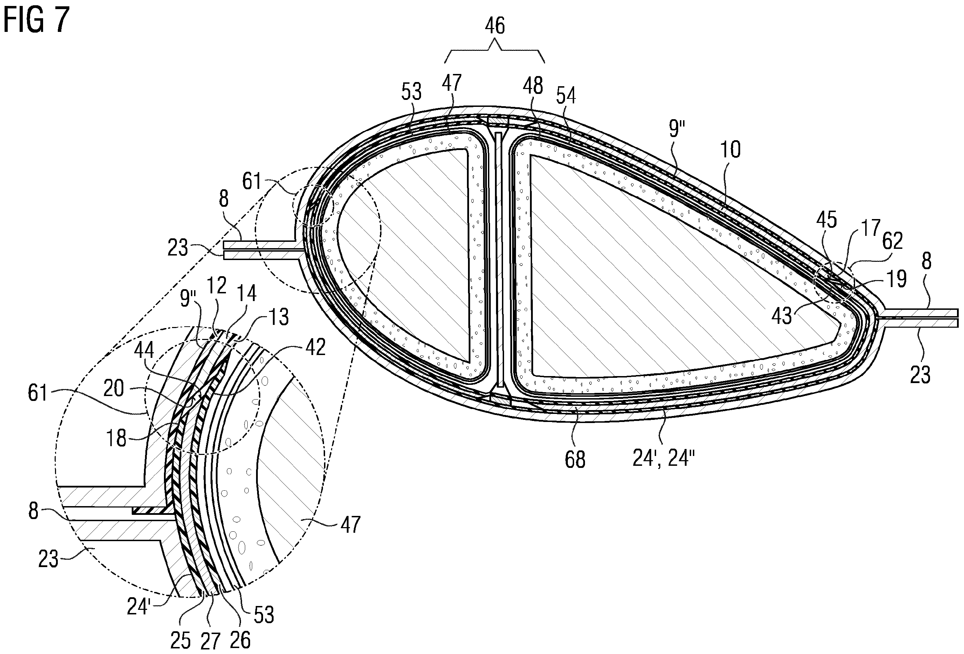

In step S1 of the method, and upper mould 8 is provided for pre-casting a fibre lay-up 9', as shown in Fig. 2. The pre-casted fibre lay-up 9", once cured and assembled, will become a first shell 10 of the manufactured blade 3 (Fig. 7). For step S1, the upper mould 8 is turned upside down, as shown in Fig. 2. A mould cavity 11 of the upper mould 8 is packed with dry fibre lay-up 9'. Since the upper mould 8 is turned upside down, the fibre lay-up 9' can be packed towards a well-defined geometry, in contrast to the case in which a fibre lay-up is packed onto a flexible mould core.

The fibre lay-up 9', 9" in the example of Fig. 2 comprises an outer laminate 12 and an inner laminate 13. Further, the fibre lay-up 9', 9" comprises a core material, e.g., a balsa core, between the outer laminate 12 and the inner laminate 13. Here, it comprises a trailing edge balsa core 14 and a leading edge balsa core 15. The outer laminate 12, the respective balsa core 14, 15, and the inner laminate 13 form a sandwich structure.

The fibre lay-up 9', 9" has a first tapered portion 17 and a second tapered portion 18 at its left and right edges in Fig. 2. In each of these tapered portions 17, 18, the inner laminate 13, the respective balsa core 14, 15, and the outer laminate 12 is tapered. Hence, the tapered portions 17, 18 each have a continuous inclined surface 19, 20.

The fibre lay-up 9', 9" in Fig. 2 further comprises a pre-casted beam 16. The beam 16 is, for example, a suction-side beam or a pressure-side beam of the blade 3.

The dry fibre lay-up 9' is pre-casted by a known vacuum infusion process, as described in EP 1 310 351 A1. In this vacuum infusion process, the fibre lay-up 9' is covered with a vacuum bag (not shown), and the vacuum bag is sealed (not shown) at horizontal portions 21, 22 of the upper mould 8. Further, a vacuum is generated in a space covered by the vacuum bag, resin (not shown) is infused into the fibre lay-up 9' and cured, resulting in the pre-casted fibre lay-up 9" shown in Fig. 2.

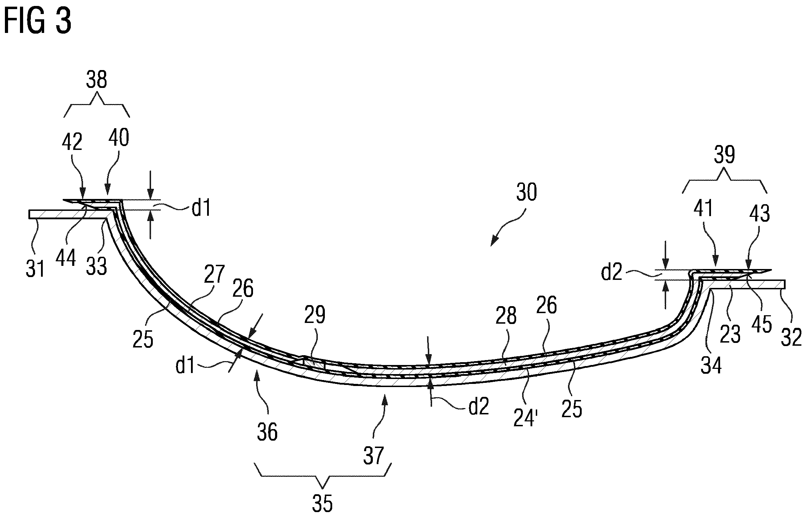

In step S2 of the method, a lower mould 23 is provided, as shown in Fig. 3. The lower mould 23 is packed with a dry fibre lay-up 24'.

The dry fibre lay-up 24' comprises an outer laminate 25 and an inner laminate 26. Further, the dry fibre lay-up 24' comprises a core material, such as a leading edge balsa core 27 and a trailing edge balsa core 28. Hence, the fibre lay-up 24' has a sandwich structure, wherein a respective balsa core 27, 28 is sandwiched in between outer and inner laminates 25, 26.

The fibre lay-up 24' further comprises a pre-casted beam 29. The beam 29 is, for example, a pressure-side beam or a suction-side beam of the blade 3.

The lower mould 23 comprises a mould cavity 30 and horizontal portions 31, 32 extending from side edges 33, 34 of the mould cavity 30.

The dry fibre lay-up 24' is packed into the lower mould 23 by arranging a main portion 35 of the dry fibre lay-up 24' inside the cavity 30. In this example, the main portion 35 comprises a first main portion 36 and a second main portion 37. The first main portion 36 is arranged to the left side in Fig. 3 of the beam 29. The second main portion 37 is arranged to the right side in Fig. 3 of the beam 29.

Further, extending portions 38, 39 of the dry fibre lay-up 24' extend from the main portion 35, i.e. from the first main portion 36 and the second main portion 37, beyond the side edges 33, 34 of the cavity 30, respectively.

The extending portion 38 comprises a first continuation portion 40 and a first tapered portion 42. The extending portion 39 comprises a second continuation portion 41 and a second tapered portion 43.

In this example, the continuation portion 40 has the same layer structure of the outer laminate 25, the leading edge balsa core 27, and the inner laminate 26 as the first main portion 36 of the fibre lay-up 24'. Further, the continuation portion 40 has the same thickness d1 as the first main portion 36. Furthermore, the continuation portion 41 has the same layer structure of the outer laminate 25, the trailing edge balsa core 28, and the inner laminate 26 as the second main portion 37 of the fibre lay-up 24'. Further, the continuation portion 41 has the same thickness d2 as the second main portion 37.

In each of the first and second tapered portions 42, 43, the inner laminate 26, the respective balsa core 27, 28, and the outer laminate 25 are tapered. Hence, the tapered portions 42, 43 each have a continuous inclined surface 44, 45.

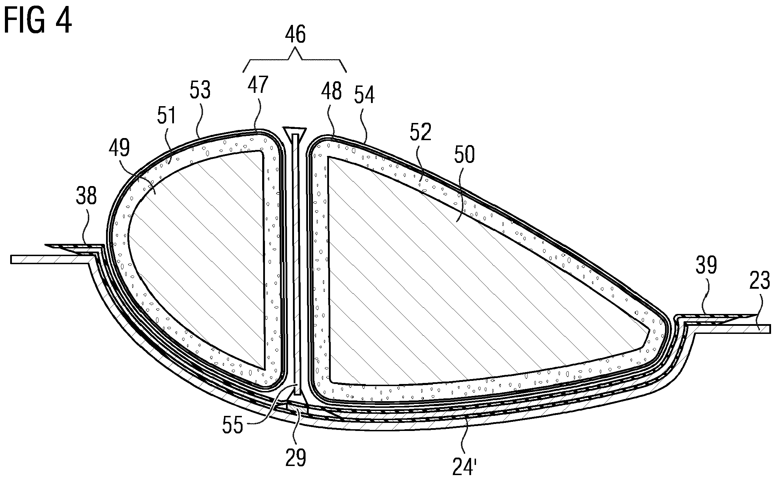

In step S3 of the method, a mould core 46 is arranged on the dry fibre lay-up 24', as shown in Fig. 4. The mould core 46 comprises a first mould core portion 47 and a second mould core portion 48. Each of the first and second mould core portions 47, 48 comprises, for example, a firm inner core 49, 50, and a flexible external portion 51, 52. The flexible external portions 51, 52 comprise, for example, a foam material which can be compressed.

Before arranging the mould core portions 47, 48, each of them is covered with a vacuum bag 53, 54, as shown in Fig. 4. The vacuum bags 53, 54 are sealed.

In step S4 of the method, a shear web 55 is provided on the dry fibre lay-up 24' and in between the first and second mould core portions 47 and 48. In the example shown in the figures, the web 55 is a dry lay-up. In other examples, the web 55 may also be pre-casted.

Step S4 may be performed simultaneously with step S3 of arranging the mould core portions 47, 48.

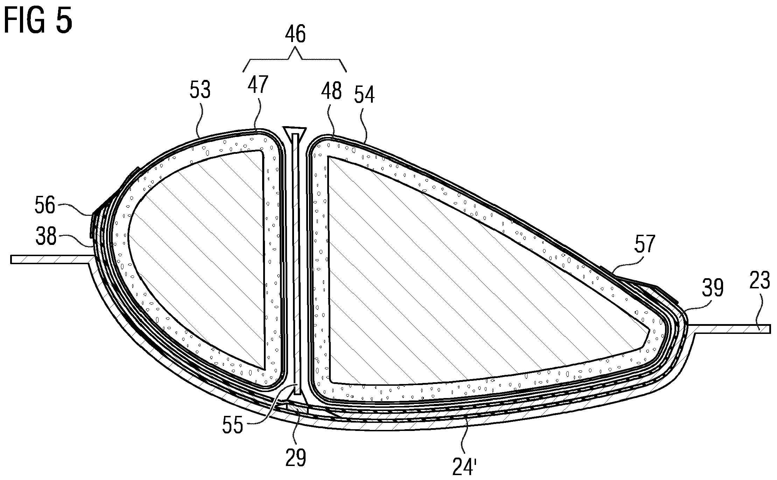

In step S5 of the method, the extending portions 38, 39 of the dry fibre lay-up 24' are folded up onto the respective first and second mould core portions 47, 48 of the mould core 46, as shown in Fig. 5.

In step S6 of the method, the extending portions 38, 39 are fixed to the respective first and second mould core portions 47, 48. In detail, the extending portion 38 is fixed to the first mould core portion 47 covered with the vacuum bag 53 by means of a first adhesive tape 56. Further, the extending portion 39 is fixed to the second mould core portion 48 covered with the vacuum bag 54 by means of a second adhesive tape 57.

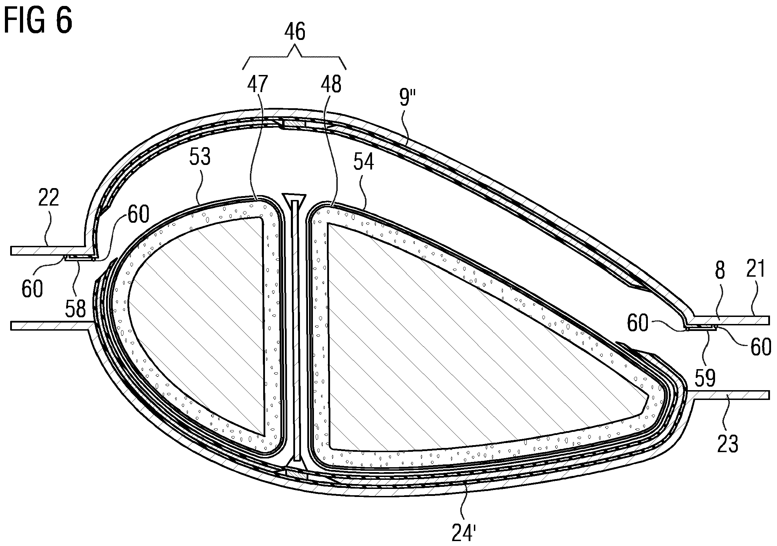

In step S7 of the method, the pre-casted fibre lay-up 9", which was pre-casted in the upper mould 8 in step S1 (Fig. 2), is fixed to the upper mould 8. The pre-casted fibre lay-up 9" is, for example and as shown in Fig. 6, fixed to the upper mould 8 by means of attaching a first foil 58 and a second foil 59 each to the pre-casted fibre lay-up 9" and the upper mould 8. The foils 58, 59 are sealed. Fig. 6 shows as example sealings 60. A vacuum is generated in a space covered by the foils 58, 59 which holds the pre-casted fibre lay-up 9" in the upper mould 8 while turning it and lowering it onto the lower mould 23 in the next step.

Step S1 and S7 may be performed before steps S2 to S6, simultaneously with steps S2 to S6, or after steps S2 to S6.

In step S8 of the method, the upper mould 8 is arranged on the lower mould 23, as shown in Fig. 6. Arranging the upper mould 8 on the lower mould 23 includes turning the upper mould 8 from the position in Fig. 2 to the position in Fig. 6. Fig. 6 shows a state in which the fibre lay-up 9" is already fixed to the upper mould 8, and the upper mould 8 is lifted, turned around and is being lowered onto the lower mould 23.

Fig. 7 shows a state in which the upper mould 8 has been arranged on the lower mould 23. The pre-casted fibre lay-up 9" and the dry fibre lay-up 24' overlap each other in both a first and a second overlap region 61, 62. Fig. 7 shows an insert with an enlarged view of the overlap region 61. In particular, the tapered portion 18 of the pre-casted fibre lay-up 9" and the tapered portion 42 of the dry fibre lay-up 24' are overlapping each other in the overlap region 61. Thereby, the inclined surface 20 of the tapered portion 18 and the inclined surface 44 of the tapered portion 42 are in direct contact with each.

Similar, the tapered portion 17 of the pre-casted fibre lay-up 9" and the tapered portion 43 of the dry fibre lay-up 24' are overlapping each other in the overlap region 62. Thereby, the inclined surface 19 of the tapered portion 17 and the inclined surface 45 of the tapered portion 43 are in direct contact with each.

In this example, as can be seen in the insert of Fig. 7, the layer structure of the pre-casted fibre lay-up 9" including the outer and inner laminates 12, 13 and the respective core material 14, 15 match the layer structure of the dry fibre lay-up 24' including the outer and inner laminates 25, 26 and the respective core material 27, 28.

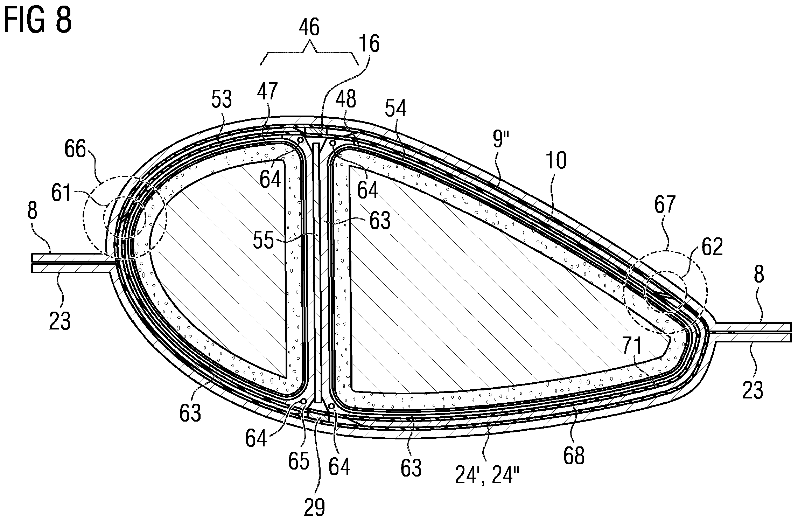

In step S9 of the method, a vacuum is generated in a space 63 defined by the upper and lower moulds 8, 23 and the vacuum bags 53, 54 covering the mould core portions 47, 48, as shown in Fig. 8.

In step S10, resin 65 is introduced in the space 63. In particular, the resin 65 is introduced in that part of the space 63 comprising the dry fibre lay-up 24', the connection regions 66, 67, and the web 55. The resin 65 is, for example, introduced by a vacuum infusion process such as Vacuum Assisted Resin Transfer Moulding (VARTM). For further details of the generation of the vacuum, the infusion and curing of the resin 65, it is referred to EP 1 310 351 A1.

The example illustrated in the figures shows a case where the web 55 is a dry lay-up. In this case, the web 55 is entirely infused with the resin 65, as shown.

In other examples, a pre-casted web instead of the web 55 may be used. Then, the resin 65 would only be infused in an upper and lower connection portion of such a web (i.e. in a region where such a web would be connected with the beam 16 and in a region where such a web would be connected with the beam 29) but not in a vertical portion of such a web.

Fig. 8 shows exemplary inlet channels 64 through which the resin 65 is infused. With the drawn-in resin 65, the dry fibre lay-up 24', the connection regions 66, 67 (between the dry fibre lay-up 24' and the pre-casted fibre lay-up 9"), and the web 55 are casted in a single process step.

Each of the connection regions 66, 67 includes, in particularly, the respective overlap region 61, 62. In this example, the connection regions 66, 67 are larger than the overlap regions 61, 62, respectively. In another embodiment, the connection regions 66, 67 and overlap regions 61, 62 may be the same, respectively.

As the fibre lay-up 9" in the upper mould 8 is pre-casted, the resin 65 has to only fill the dry fibre lay-up 24', the connection regions 66, 67 and the web 55 but not the remaining portion of the pre-casted fibre lay-up 9" during the vacuum infusion process in step S9. Thus, the resin 65 has to travel a shorter path and fill a smaller volume compared to the case in which a fibre lay-up in the upper mould 8 is in a dry condition, i.e. without resin.

In step S11, the infused resin 65 is cured by a known process to obtain a cured and assembled blade shell. As shown in Fig. 8, the pre-casted fibre lay-up 9" in the upper mould 8 becomes in the manufactured blade 3 the first half shell 10. Further, the fibre lay-up 24" in the lower mould 23 becomes, once infused and cured, in the manufactured blade 3 a second half shell 68. The web 55, once cured, transversally connects the first half shell 10 and the second half shell 68 within an interior cavity 71 of the blade 3.

In this example, the resulting fibre-reinforced resin laminate of the shells 10, 68 has the same structure comprising the inner laminates 13, 26, the core materials 14, 15, 27, 28, and the outer laminates 12, 25 throughout the overlap regions 61, 62 and the connection regions 66, 67. Therefore, a blade 3 having a shell with homogenous properties, such as homogenous strength and weight, across the overlap and connection regions 61, 62, 66, 67 is obtained.

In step S12 (not shown), the mould core portions 47, 48 and the vacuum bags 53, 54 are removed from the blade 3, e.g., through a root section of the blade 3.

With this method, a blade is manufactured in which the first and second shells 10, 68 are connected with each other by a laminate joint which is a light and at the same time strong joint.

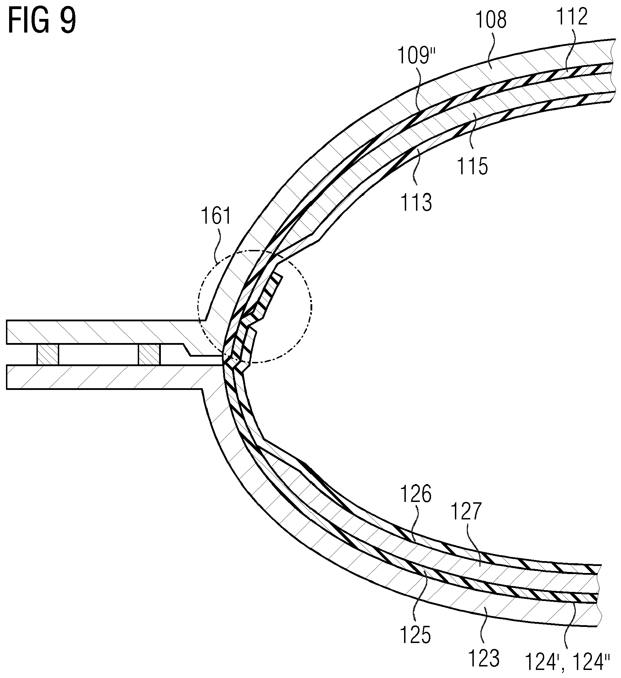

In a further embodiment, as shown in Fig. 9, an overlap region 161 of a pre-casted fibre lay-up 109" in an upper mould 108 and a dry fibre lay-up 124' in a lower mould 123 does not contain a core material 115, 127. Thus, in the overlap region 161, the outer and inner laminates 112, 113 of the pre-casted lay-up 109" overlap with the outer and inner laminates 125, 126 of the fibre lay-up 124', 124" in the lower mould 123. However, the core material 115 of the pre-casted fibre lay-up 109" does not overlap with the core material 127 of the fibre lay-up 124', 124" in the lower mould 123.

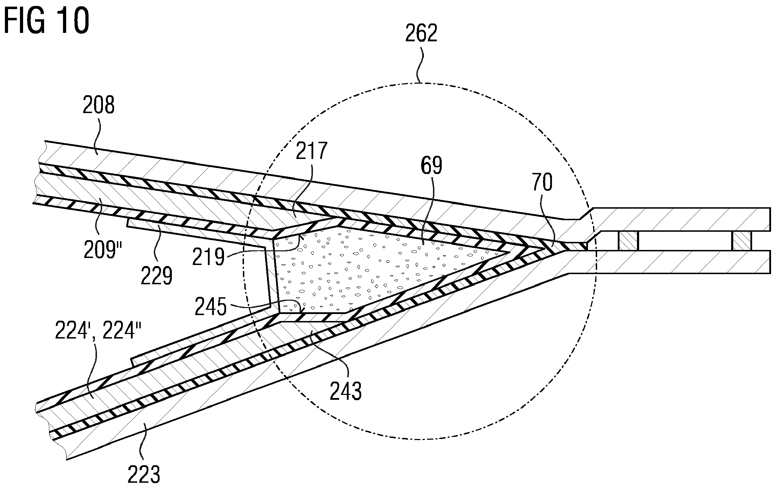

In a further embodiment, as shown in Fig. 10, an auxiliary material 69 is disposed in an overlap region 262 of a pre-casted fibre lay-up 209" in an upper mould 208 and a fibre lay-up 224', 224" in a lower mould 223. The auxiliary material 69 is, for example, a PUR material. It is applied in the example of Fig. 10 to form a sharp edge 70 of an aerodynamic profile of the blade 3, e.g. at a trailing edge of the airfoil.

The auxiliary material 69 is arranged in the example of Fig. 10 between an inclined surface 219 of a tapered edge portion 217 of the pre-casted fibre lay-up 209" and an inclined surface 245 of a tapered edge portion 243 of the fibre lay-up 224', 224" in the lower mould 223. Furthermore, a mini-web 229 is arranged connecting the pre-casted fibre lay-up 209", the auxiliary material 69 and the fibre lay-up 224', 224".

Although the present invention has been described in accordance with preferred embodiments, it is obvious for the person skilled in the art that modifications are possible in all embodiments.

## Claims

1. A method for manufacturing a wind turbine blade (3), comprising the steps of:
- arranging (S8) an upper mould (8) comprising a pre-casted fibre lay-up (9") on a lower mould (23) comprising a dry fibre lay-up (24') and a mould core (46),
- applying vacuum (S9) to a space (63) between the upper and lower moulds (8, 23) and the mould core (46),
- infusing (S10) at least the dry fibre lay-up (24') and a connection region (66, 67) between the dry fibre lay-up (24') and the pre-casted fibre lay-up (9") with a resin (65), and curing (S11) the resin (65).

2. The method according to claim 1, wherein the dry fibre lay-up (24') and/or the pre-casted fibre lay-up (9") includes a fibre core material (14, 15, 27, 28).

3. The method according to claim 1 or 2, wherein the connection region (66, 67) comprises an overlap region (61, 62) in which the pre-casted fibre lay-up (9") and the dry fibre lay-up (24') overlap each other.

4. The method according to claim 2 and 3, wherein the pre-casted fibre lay-up (9") and/or the dry fibre lay-up (24') comprises the fibre core material (14, 15, 27, 28) in the overlap region (61, 62).

5. The method according to claim 3 or 4, wherein both the dry fibre lay-up (24') and the pre-casted fibre lay-up (9") comprise at least one tapered edge portion (17, 18, 42, 43) overlapping each other in the overlap region (61, 62).

6. The method according to one of claims 1 to 5, wherein the pre-casted fibre lay-up (9") and the dry fibre lay-up (24') are in direct contact with each other in the connection region (66, 67).

7. The method according to one of claims 1 to 5, wherein an auxiliary material (69) is disposed between a surface (219) of at least one edge portion (217) of the pre-casted fibre lay-up (9") and a surface (245) of at least one edge portion (243) of the dry fibre lay-up (24').

8. The method according to one of claims 1 to 7, wherein the dry fibre lay-up (24') in the lower mould (23) has a main portion (35) inside a cavity (30) of the lower mould (23) and at least one extending portion (38, 39) extending from the main portion (35) beyond a side edge (33, 34) of the cavity (30) of the lower mould (23), and wherein the method comprises, before the step of arranging (S8) the upper mould (8) on the lower mould (23), the steps of arranging (S3) the mould core (46) on the dry fibre lay-up (24') in the lower mould (23) and folding up (S5) the at least one extending portion (38, 39) of the dry fibre lay-up (24') onto the mould core (46) .

9. The method according to claim 8, wherein a continuation portion (40, 41) of the at least one extending portion (38, 39) has the same layer structure and/or the same thickness (d1, d2) as the main portion (35), the continuation portion (40, 41) being continuous with the main portion (35).

10. The method according to claim 8 or 9, comprising, after the step of folding up (S5) the at least one extending portion (38, 39) onto the mould core (46), the step of fixing (S6) the at least one folded-up extending portion (38, 39) at the mould core (46).

11. The method according to one of claims 1 to 10, comprising, before the step of arranging (S8) the upper mould (8) comprising the pre-casted fibre lay-up (9") on the lower mould (23), the step of fixing (S7) the pre-casted fibre lay-up (9") to the upper mould (8).

12. The method according to one of claims 1 to 11, comprising, before the step of applying vacuum (S9), the step of covering the mould core (46) with a vacuum bag (53, 54), and wherein the vacuum is applied to a space (63) between the upper and lower moulds (8, 23) and the vacuum bag (53, 54).

13. The method according to one of claims 1 to 12, comprising, before the step of arranging (S8) the upper mould (8) on the lower mould (23), the step of arranging one or more reinforcement beams (29) on the dry fibre lay-up (24').

14. The method according to one of claims 1 to 13, comprising, before the step of arranging (S8) the upper mould (8) on the lower mould (23), the step of arranging (S4) a web (55), and wherein at least the dry fibre lay-up (24'), the connection region (66, 67) and the web (55) is infused (S10) with resin (65).

15. The method according to claim 14, wherein the web (55) is configured to transversally connect the pre-casted fibre lay-up (9") and the dry fibre lay-up (24', 24"), once cured, within an interior cavity (71) of the blade (3).
